# EUROPEAN PATENT APPLICATION

(11) **EP 3 388 999 A1**
(43) Date of publication of application: **17.10.2018**
(21) Application number: 17166045.9
(22) Date of filing: 11.04.2017
(51) Int. Cl.: G06Q 30/02, G06Q 30/06

(54) **DISPLAYING FURTHER INFORMATION ABOUT A PRODUCT**

(71) Applicant: Pricer AB, 101 24 Stockholm (SE)
(72) Inventor: HULTH, Nils, 101 24 Stockholm (SE)
(74) Representative: AWA Sweden AB

(57) **Abstract**

A sequence of input images is obtained, an electronic label (100) in the input images is detected, and a position of the electronic label in the input images is tracked. The electronic label has a first display (110) for displaying information about a product (130) associated with the electronic label. Information is extracted, based on at least one of the input images, about what is shown at the electronic label, and further information about the product associated with the electronic label is obtained, based in the extracted information. Data representing a sequence of output images to be displayed at a second display (270) is generated. The output images include a visual representation (210, 220, 230, 240) of the further information. Based on the tracked position of the electronic label in the input images, positions at the second display at which at least a portion (210, 220, 240) of the visual representation is to be displayed in the output images is determined.

## Description

### Technical field

The present invention generally relates to the field of displaying information about a product.

### Background

In a retail store different products may be arranged at shelves distributed throughout the store. It may be beneficial to display information about a product in vicinity of the product. The information to be displayed may include a price, various properties of the product, or other sales information. Different types of signs or labels may be arranged along the shelves for displaying such information. However, there is limited space for signs or labels along the shelves in a retail store, which limits the amount of information that can be displayed. Having too large (or too many) signs or labels may risk blocking the customer's view of the actual products on display at the shelves. Further, having too many signs or labels showing information about different product may make it difficult for a customer to grasp the information displayed.

An example of known solutions for displaying information about a product is provided in the United States patent application US 2012/0259744 A1. In that example solution, a user is provided with information gathered from various sources from the Internet in an augmented reality format by attaching the information virtually to the product in a video feed. However, detecting and/or tracking different types of products in a video feed may be difficult, depending on the image quality and the visual appearance of the particular products. A lot of processing power may be needed to obtain sufficiently accurate tracking without too much delay. It may also be difficult to distinguish between similar products in the video feed, which is needed for attaching the correct information to a product in the video feed.

For at least the reasons described above, it would be desirable to provide a new way to display information about products.

### Summary

An object of the present disclosure is to address at least one of the issues described above. To achieve this, a method, a system and a computer program product for displaying further information about a product are provided. Further embodiments are defined in the dependent claims.

According to first aspect, a method is provided. The method comprises obtaining a sequence of input images, detecting an electronic label in the input images, and tracking a position of the electronic label in the input images. The electronic label has a first display for displaying information about a product associated with the electronic label. The method further comprises extracting, based on at least one of the input images, information about what is shown at the electronic label, and obtaining, based on the extracted information, further information about the product associated with the electronic label. The method further comprises generating data representing a sequence of output images to be displayed at a second display, wherein the output images include a visual representation of the further information. The generating the data includes determining, based on the tracked position of the electronic label in the input images, positions at the second display at which at least a portion of the visual representation is to be displayed as part of the respective output images.

Some products may be difficult to track in images due to their visual appearance. For example, some products may lack features which are easily distinguishable (or detectable) via image processing, such as a shape with distinct edges or corners, or a clearly visible logotype. Electronic labels are often arranged close to the products for displaying information about the products (such as prices), and the electronic labels may be easier to track in images than the products themselves. For example, electronic labels with a common easily trackable shape may be employed for products which themselves have very different visual appearances (some of which may be difficult to track in images). This may increase the reliability (or robustness) of the tracking, reduce the processing resources needed for the tracking, and/or reduce delays experienced by a user (e.g. due to reduced processing times).

By determining, based on the tracked position of the electronic label in the input images, positions at the second display at which at least a portion of the visual representation of the further information is to be displayed as part of the respective output images, further information about the product may be conveyed to a user in a way which is dynamically adapted based on the position of the electronic label in the input images. This dynamic adaption allows a user watching the second display to experience a visual connection (or link) between the further information and the electronic label, and thereby indirectly also a connection between the further information and the product itself. The dynamic adaption of the position of the visual representation of the further information may be employed to convey an augmented reality experience to the user, in which information about the product displayed by the electronic label is complemented or replaced by further information displayed at the second display. This dynamic adaption is in contrast to a situation where further information about the product is simply displayed at a fixed position of the second display, without any adaption to the position of the electronic label in the input images.

The ability of the second display to display further information about the product allows such further information to be displayed to a user without necessarily affecting what other people see when they watch the electronic label associated with the product.

In contrast to information printed on a regular paper label, information displayed by the first display of the electronic label may for example be changed or updated over time. This may for example allow the information to be extracted from the input images, and to be used for obtaining the further information, to be changed or updated. This may for example be useful if new products are introduced so that an information format which was previously sufficient to uniquely identify all products needs to be modified or extended to be able to identify also the new products. In other words, the use of electronic labels allows the information format employed to identify the labels (or the products associated with the labels) and employed to obtain the further information about the products associated with the labels to be changed or updated if need arises later on. Such an update may for example be performed via an update of a database storing information about the products, and from which the electronic labels may retrieve information to be displayed by their respective displays.

Although a code (such as a bar code or QR code) printed on a product may be convenient for identifying a product from close range, such codes may be quite difficult to track in images from a longer distance. Electronic labels may for example display information sufficient to identify the product they are associated with (for example by displaying a bar code), but may also be relatively easy to track in images, even at a distance.

The input images may, for example, be images captured by a camera. The input images may, for example, be obtained in the form of a sequence of snapshots or in the form of a video stream.

The electronic label may, for example, be an Electronic Shelf Label (ESL), or some other type of label with an electronic display for displaying information about a product.

Tracking the position of the electronic label in the input images may, for example, include detecting (or determining) the position of the electronic label in each of the input images, or in a subset of the input images.

The extracted information may, for example, include a barcode or a QR code visible at a casing of the electronic label, or information (such as text) displayed at the first display.

The further information may, for example, be obtained via a request to a database.

It will be appreciated that the "further information" may be any type of information associated with the product. It may for example include sales information (such as a price, the number of items in stock, or availability of sizes or colors), information about other related products, or information intended for personnel in the retail environment (for example information about how the product is to be restocked). The further information may for example include information specifically targeted at the customer, such as a loyalty price.

The visual representation of the further information may for example include the further information itself, but may also include visual effects such as arrows, highlighters, visual elements, text, images, or graphs. The visual representation may, for example, include a modification to be applied to the input images, such as a color effect or an increased size of something in the output images.

The data representing the output images may for example be provided in the form of a video stream. Once the data representing the output images has been generated, the data may, for example, be provided or outputted to the second display.

The output images may for example include only the visual representation of the further information, or may be combinations of the input images and the visual representation in the input images.

It will be appreciated that the data representing the sequence of output images may for example be generated while the position of the electronic label is being tracked. It will also be appreciated that the extracting of information about what is shown at the electric label and the obtaining of the further information may for example be performed prior to generating the data representing the sequence of output images.

According to some embodiments, the visual representation of the further information may cover at most 50 percent (or at most 40 percent, or at most 30 percent, or at most 20 percent, or at most 10 percent) of the second display. In other words, the area of the second display covered by the visual representation may for example amount to no more than 50 percent (or at most 40 percent, or at most 30 percent, or at most 20 percent, or at most 10 percent) of the total area of the second display.

The part of the second display not covered by the visual representation of the further information may allow the user to see also objects from the real world (such as the electronic label or the product with which the electronic label is associated) via the second display. If only a small portion of the second display is covered by the visual representation, it may be easier to convey to the user a visual impression of where in the real world the further information belongs (such as to which electronic label and/or product present at the shelf of a store the further information is actually relevant).

According to some embodiments, the output images may be modified versions of the input images. Generating the data may comprise modifying the input images, or modified versions of thereof, by including the visual representation of the further information in accordance with the determined positions.

Inclusion of the visual representation of the further information in the output images allows the output images to convey an augmented reality experience to the user.

To obtain the output images, the input images may for example be subjected to one or more modification steps, such as processing, filtering, rescaling, and/or via selection of only certain parts of the images. The visual representation of the further information may, for example, be included in the images before or after any of these modification steps. For example, the output images may be the input images with extra visual information added to them, or the output images may be modified or processed versions of the input images with extra visual information added to them.

The output images may, for example, be displayed in real-time, or almost in real-time, as the user watches the second display. The displaying of the output images may, for example, be delayed in time relative to the input images.

The visual representation of the further information may for example be semitransparent, so that a user may also see real world objects located at the position where the visual representation is included in the images.

According to some embodiments, the positions may be determined such that the at least a portion of the visual representation of the further information is provided within a certain distance from the electronic label in the output images. This allows for at least a portion of the visual representation to follow the electronic label in the output images.

For example, an arrow pointing from further information in the form of a new price may point towards the electronic label in the output images as the electronic label moves in the images. In other words, the arrow head may follow the electronic label in the output images.

The certain distance may be, for example, a predefined distance, or a distance determined based on the size of the electronic label in the input images. The visual representation of the further information may for example be provided closer to the electronic label than the certain distance in some or all of the output images.

According to some embodiments, the positions may be determined such that the at least a portion of the visual representation of the further information overlaps or replaces at least part of the electronic label in the output images. This allows for information shown at the electronic label to be at least partly overwritten. For example, a new price may be displayed for a specific customer, or information for internal use at a store may be displayed to an employee.

According to some embodiments, the second display may be at least partially light transmissive (or transparent or translucent) for allowing a user to see objects behind the second display as well as the output images when the output images are displayed at the second display. In other words, the user may see through the light transmissive second display on which further information may be displayed. This allows for adding (or superimposing) further information to what the user sees of the real world through the second display, thereby providing the user an augmented reality view.

The output images may, for example, cover only a portion of the second display. The portion of the second display covered by the output images may, for example, be determined based on the tracked position of the electronic label in the input images.

According to some embodiments, the positions may be determined such that the at least a portion of the visual representation of the further information is provided within a certain distance from regions of the second display corresponding to the tracked position of the electronic label in the input images, or such that the at least a portion of the visual representation of the further information overlaps regions of the second display corresponding to the tracked positions of the electronic label in the input images.

If the second display is at least partially light transmissive, a region of the second display corresponding to a position of the electronic label in an input image may, for example, be a region of the second display covering (or corresponding to) the electronic label as perceived by a user looking towards the electronic label through the second display.

Having at least a portion of the visual representation provided within a certain distance from (or overlapping) the regions of the second display corresponding to the tracked position of the electronic label in the input images may allow for the at least a portion of the visual representation to follow the position of the electronic label as perceived by a user watching the electronic label through the second display, if the second display is at least partially light transmissive. When the electronic label gets a new position in the input images, a position of at least a portion of the visual representation of the further information may change accordingly in the output images. Allowing the visual representation to move in this way may give the user an augmented reality view of an environment (e.g. a retail environment) in which the product and the electronic label may be arranged.

According to some embodiments, the certain distance may be twice (or three times, or four times or five times) as large as a width (or diameter) of the electronic label in the respective input images. In other words, the certain distance may scale with the size of the electronic label in the input images.

According to some embodiments, the certain distance may be a fourth (or a fifth, or a sixth) of a diameter (or width) of the second display. The certain distance may, for example, be a predefined or pre-determined distance.

According to some embodiments, the at least a portion of the visual representation of the further information may include a portion of the further information itself (such as a reduced price of the product), a portion of a visual link between the further information and the electronic label, or a portion of a visual effect for conveying the further information.

For example, the at least a portion of the visual representation may include a visual link in the form of an arrow linking a new price to the electronic label or some type of pointer pointing towards the electronic label. Other visual effects may include a cross-over of information displayed by the electronic label, the cross-over conveying the further information that the information displayed by the electronic label is not valid for the particular user.

According to some embodiments, the extracted information may be information about what is displayed at the first display. For example, the extracted information may be based a text displayed at the first display (such as a product name), or a code, such as a bar code or a QR code.

According to some embodiments, at least one of the steps of detecting the electronic label in the input images and tracking a position of the electronic label in the input images may be based on knowledge of a visual characteristic shared by a plurality of electronic labels associated with different types of products. Using the known visual characteristics of the electronic label may facilitate (or decrease the image processing power needed for) detecting and tracking of the electronic label in the input images. As the visual characteristics is shared by the electronic labels, the same image processing algorithm may, for example, be used for all the electronic labels.

The visual characteristics may, for example, include a shape or color shared by the electronic labels.

According to some embodiments, the further information may comprise a price of the product, a property of the contents of the product or information about different versions of the product.

According to some embodiments, the further information may comprise information about how many items of the product (i.e. the product associated with the electronic label) are to be arranged at a shelf, or information about how (e.g. at which positions, orientations and/or angels) items of the product are to be positioned at a shelf. This may, for example, help staff restocking products in a store.

According to a second aspect, a computer program product is provided. The computer program product comprises a computer-readable medium with instructions for performing the method of any of the embodiments of the first aspect. The computer readable medium may, for example, be a non-transitory computer-readable medium.

According to a third aspect, a system is provided. The system comprises a camera configured to capture a sequence of input images, and processing means configured to detect an electronic label in the input images. The electronic label comprises a first display configured to display information about a product associated with the electronic label. The system further comprises a second display configured to display a sequence of output images. The processing means is further configured to track a position of the electronic label in the input images, and to extract, based on at least one of the input images, information about what is shown at the electronic label. The processing means is further configured to obtain, based on the extracted information, further information about the product associated with the electronic label, and to generate data representing the output images to be displayed at the second display. The output images include a visual representation of the further information. The generation of the data includes determination, based on the tracked position of the electronic label in the input images, of positions at the second display at which at least a portion of the visual representation is to be displayed as part of the respective output images.

The processing means may, for example, comprise one or more processors. The processing means may, for example, be arranged in a portable device or may be distributed at multiple locations.

According to some embodiments, the camera, the second display, and at least part of (or a portion of) the processing means may be comprised in a portable device. The portable device may for example be a handheld device (such as a smartphone or tablet computer), or it may be a head-wearable device (such as augmented reality glasses). A user may for example employ such a portable device for capturing the input images and watching the output images.

According to some embodiments, the system may further comprise a database and a plurality of electronic labels having displays for displaying information about different products associated with the respective electronic labels. The database may be configured to store, for each of the products, information about what is shown at (or displayed by) the electronic label associated with the product, and further information about the product. The processing means may be configured to obtain the further information via a request to the database.

It is noted that embodiments of the invention relate to all possible combinations of features recited in the claims. Further, it will be appreciated that the various embodiments described for the method in accordance with the first aspect are all combinable with embodiments of the system in accordance with the third aspect, and vice versa.

### Brief description of the drawings

Exemplifying embodiments will be described below with reference to the accompanying drawings, in which:
Figure 1 illustrates a retail environment including a plurality of products and electronic labels;
Figure 2 illustrates a handheld device displaying further information about a product, according to an embodiment;
Figure 3 illustrates a head-wearable device displaying further information about a product, according to an embodiment;
Figure 4 is an overview of a system for displaying further information about a product, according to an embodiment; and
Figure 5 is a flow chart of a method for displaying further information about a product, according to an embodiment.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the drawings, the sizes of elements and regions may be exaggerated for illustrative purposes and, thus, are provided to illustrate the general structures of the embodiments.

### Detailed description

Exemplifying embodiments will now be described more fully hereinafter with reference to the accompanying drawings. The drawings show currently preferred embodiments, but the invention may, however, be embodied in many different forms and should not be construed as limited to the embodiments set forth herein; rather, these embodiments are provided for thoroughness and completeness, and to fully convey the scope of the present invention to the skilled person.

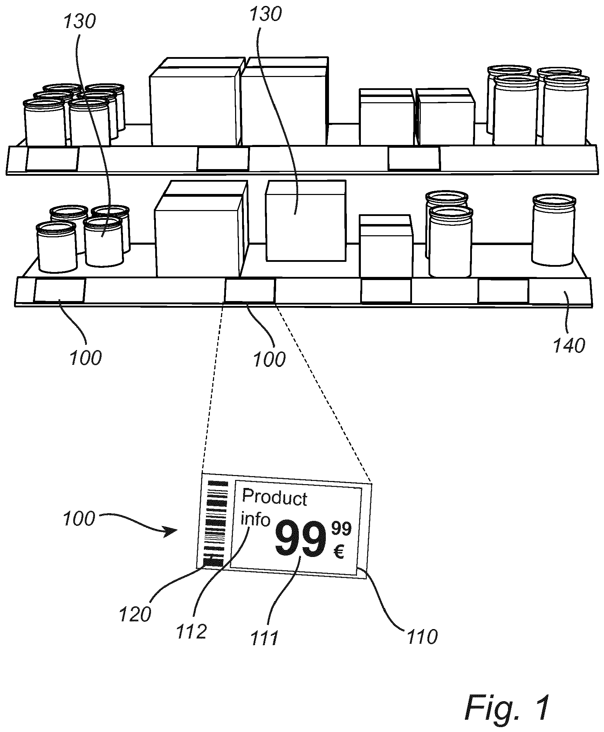

Figure 1 illustrates a retail environment including a plurality of products 130 and electronic labels 100. The products 130 are arranged on shelves 140 thought a retail store. The electronic labels 100 associated with the products 130 are arranged along the shelves 140, for example below the respective products 130. The electronic labels 100 display information about the products 130 on the shelves 140, for example, the names and prices of the products 130.

In the present example, each of the electronic labels 100 is adapted to be placed on or attached to a shelf 140 close to a product 130. The electronic label 100 has a display 110 for displaying a price 111 or other information 112 about the product 130. The display 110 may, for example, be an e-ink display or an LCD display. What is shown at the display 110 may be dynamically updated, either automatically or by a person, with information from a database, a server or some other information source. A code 120, such as a bar code or a QR code, may be provided on the exterior of the electronic label 100 for identification of the electronic label 100. The display 110 may, for example, display a barcode or a QR-code or any other type of code for identification of the product 130 or the electronic label 100 itself.

The electronic label 100 may be connected to a control unit (not shown in Figure 1) via a wired or wireless connection. The control unit controls the information the electronic label 100 should display. The control unit may be connected to a database storing the information to be displayed about the products 130.

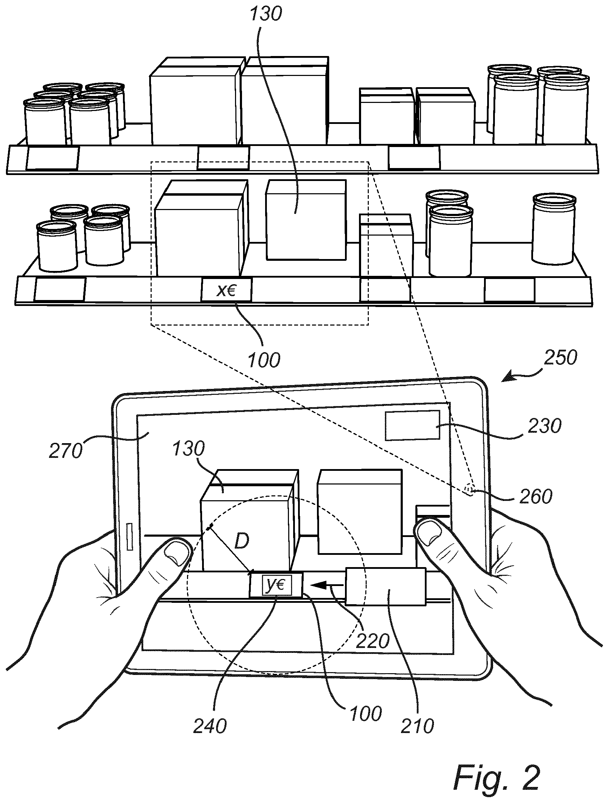

Figure 2 illustrates a handheld device 250 displaying further information about a product 130 according to an embodiment. The handheld device 250 may, for example, be a smartphone or a tablet computer.

The handheld device 250 comprises a camera 260 and a display 270. The camera 260 is employed to capture a sequence input images which may include one or more electronic labels 100. The input images could also include product 130 associated with the label 100, but that is not necessary for the present embodiment. The camera 260 may for example be a charge-coupled device (CCD) camera or some other type of digital camera employed in smartphones. The input images may, for example, be obtained in the form of a sequence of snap shots or a video stream.

The display 270 may for example be an LCD display or a touchscreen display 270. The display 270 is employed to display a sequence output images. The output images are modified versions of the input images captured by the camera 260, wherein further information in the form of virtual labels 210 and 230 have been included. The user may then see an augmented reality view of the input images, wherein the user can see the electronic label 100 (and optionally the product 130) together with further information 210, 230 about the product 130 complementing the information displayed by the electronic label 100. The augmented reality functionality may for example be activated by the user of the handheld device 250 selecting an appropriate application installed at the handheld device 250, and then pressing a start button.

Processing means (not shown in Figure 1) provided in the handheld device 250, or at a remote location, obtains the input images form the camera 260. The processing means may, for example, include one or more processors. The electronic label 100 is detected and tracked in the input images by the processing means via use of image processing (for example digital image processing). Tracking of the electronic label 100 may for example include determining the position of the electronic label 100 in each (or some) of the input images captured by the camera 260. The position may be determined based on knowledge of the shape or some other visual characteristics of the electronic label 100. The electronic label 100 may, for example, be easy to detect and track via its rectangular shape with a known relation between height and width, and/or via presence of the display 110 at a predefined position in the electronic label 100. Once the position of the electronic label 100 has been determined in at least one image, such determined positions of the electronic label 100 may be employed when tracking the position of the electronic label 100 in subsequent images captured by the camera 260.

Information shown at the electronic label 100 may be extracted by the processing means via image recognition and/or image processing. The information extracted may for example be the price 111 or other information 112 shown on the display 110, or it may be a barcode 120 provided at the exterior of the electronic label 100 (for example located to the left of the display 110, as shown in Figure 1). The other information 111 may be a unique identifier or a name of the product 130. The code or barcode 120 may also serve as a unique identifier for the product 130. The identifier or the information extracted may be used by the processing means to obtain further information about the product 130 from a database. Such further information may, for example, be sales information about the product 130, a new price specific to the customer using the device 250, or other related products which a store owner wants to showcase.

As the electronic label 100 is tracked, information from the electronic label 100 does not necessarily have to be extracted for every image in the sequence of input images. For example, new information may be extracted every 1 second or 10 seconds. The same applies for the obtaining of the further information. The further information does not necessarily have to be obtained again for every input or output image, but may be periodically updated.

The further information about the product 130 may be displayed in the form of a visual representation. A visual representation may, for example, include text, visual effects, visual links such as arrows, lines, circles, etc. In the current example, the further information is displayed as a graphical element with text 210, an arrow 220 and another graphical element with text 230. The graphical elements may for example be semitransparent, so that a user may also see real world objects located at the position where the graphical elements are shown at the display 270.

Processing means in the device 250 or at a remote location generates data representing the output images to be displayed by the display 270 of the handheld device 250. The generated data may, for example, be provided in the form of a video stream. The output images include the visual representation of the further information, which has been added to the input images captured by the camera 270. The input images may for example be subjected to one or more processing steps before the visual representation is added, for example to compensate in case the camera 270 takes captures the input images from a somewhat different view than at which the output images are displayed at the display 270. For those parts of the visual representation which are to follow the electronic label 100 in the output images, the appropriate positions at the display 270 are determined based on the tracked position of the electronic label 100 in the input images.

In the present example, the positions of the arrow 220 and the text 210 in the output images are determined based on the tracked position of the electronic label 100 in the input images. This allows the arrow 220 and the text 210 to follow within a distance D from the electronic label 100 in the output images as the electronic label 100. In the present example, the other text 230 is displayed at a fixed position in the corner of the display 250 as long as the electronic label 100 is present in the input images, regardless of its position therein.

The visual representation may also at least partly overlap the information displayed by the electronic label 100 itself. Such an overlap may be employed for overwriting the price, the product name or any other piece of information displayed by the electronic label 100. For example, the text box 230 could be placed to cover the entire electronic label 100 as the electronic label 100 moves in the images, instead of the text box 230 being fixed in the corner of the display 270.

Such overwriting of information is exemplified herein by a price "X€" displayed at the electronic label 100 being replaced by a reduced price "Y€" by placing a text box 240 showing the reduced price over the electronic label 100.

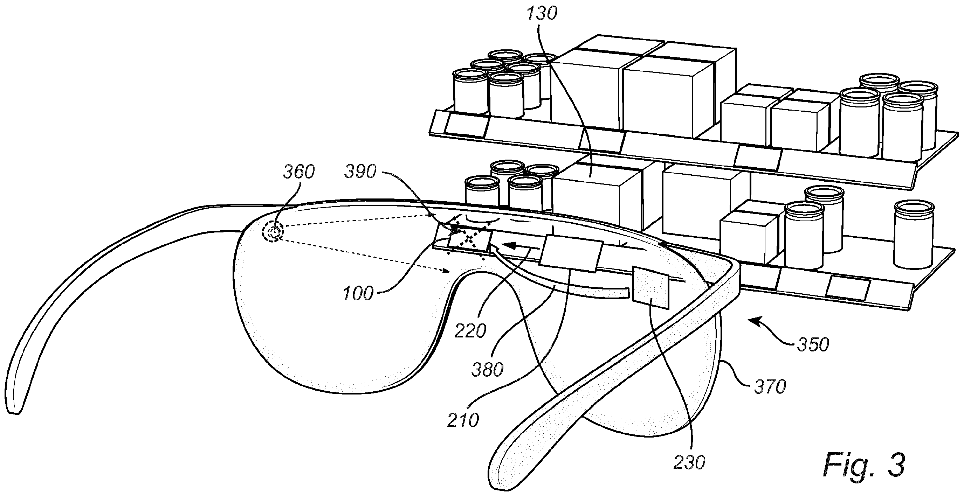

Figure 3 illustrates a head-wearable device 350 displaying further information about a product 130, according to an embodiment.

The head-wearable device comprises a light transmissive (or at least partially transparent) display 370, and a camera 360. The camera 360 is employed to capture images of an electronic label 100 associated with the product 130. Further information about the product 130 is displayed by the light transmissive display 370 based on the position of the electronic label 100 in the input images. The user watching the electronic label 100 through the display 370 then sees an augmented reality view, wherein further information 210, 220, 230, 380 about the product 130 is provided by the display 370.

In the present example, the head-wearable device 350 is some form of augmented reality glasses. Embodiments may also be envisaged in which the head-wearable device is a helmet provided with an augmented reality visor.

In analogy with what is described above with reference to Figure 2, the position of the electronic label 100 may be tracked in the input images captured by the camera 360. In analogy with what is described above with reference to Figure 2, the information displayed on the electronic label 100 may be extracted, based on at least one of the input images, and the extracted information may be employed to obtain (or retrieve) further information about the product 130 from a database.

The further information may be obtained in the form of a visual representation, or a visual representation of the further information may be determined based on the further information. The visual representation may, for example, include the further information itself (for example raw data/text), a visual link (such as an arrow or pointer) or some other visual effect. The visual representation may be included in output images to be displayed on the display 370.

The visual representation (or a portion thereof) may be displayed within a certain distance from a position corresponding to the electronic label 100 in the input images, i.e. at a position at the display 370 close to the position of the electronic label 100 as seen by the user through the display 370. For the visual representation to stay within that distance from the electronic label 100 as perceived by a user watching the electronic label 100 through the display 270, an appropriate position for the visual representation at the display 370 is computed based on the tracked position of the label 100 in the input images.

Information following the electronic label is exemplified herein by the text 210 and the arrow 220, just like in Figure 2. In the present example, the visual representation also includes a cross 390 placed over the electronic label 110 to indicate that the price showing there does not apply to the specific user of the eye-wearable device due to a person discount. In analogy with what is described above with reference to Figure 2, part of the visual representation may be provided at a fixed position, such as a text box 230 at the corner of the display 370. However, in the present example, an arrow 380 follows the electronic label 100 to provide a visual link between the textbox 230 and the electronic label 100 as the display 370 moves relative to the electronic label 100. It will be appreciated that part of the arrow 380 may for example remain fixed while the arrow head may follow the electronic label 100 over the display 370.

It will be appreciated that there may be more than one electronic label 100 in the view of the cameras 260, 360 (and thereby in the input images) described with reference to Figures 2 and 3, and that the output images may therefore be provided with further information for each of such electronic labels 100. The portable device 250 described with reference to Figure 2 and the head-wearable device 350 described with reference to Figure 3 may for example be systems which are able to independently obtain and display further information about a product 130. However, in at least some example embodiments, such devices may rely on processing capabilities and/or databases located elsewhere.

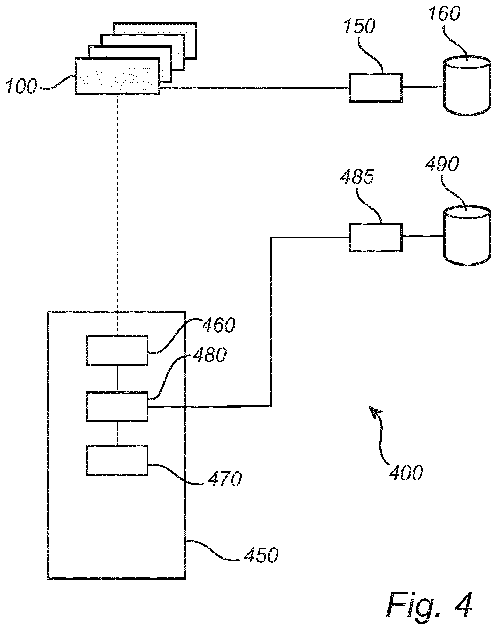

Figure 4 is an overview of a system 400 for displaying further information about a product 130, according to an embodiment. The system 400 comprises a plurality of electronic labels 100 which may be distributed in a retail store or warehouse close to products with which they are associated. The labels 100 are connected to a control unit 150 via a wired or wireless connection. The control unit 150 may update the information displayed by the labels 100 based on information from a database 160. The database 160 may, for example, comprise prices or/or other information about products 130 associated with the labels 100. The control unit 150 and/or the database 160 may be located in a vicinity of the electronic labels 100, or may be arranged at a remote location.

The system 400 further comprises a user device 450 comprising a camera 460, a display 470 and processing means 480. The user device 450 may for example be the hand-held device 250 described with reference to Figure 2 or the head-wearable device 350 described with reference to Figure 3. The system 400 may optionally comprise additional processing means 485 (for example in the form of one or more processors) outside of the user device 450, such as on a remote server or in the cloud.

The camera 460 is configured to capture input images. The camera 460 may transfer the images to the processing means 480, 485. The processing means 480, 485 may determine if there are any electronic labels 100 in the images, and if so track a position of at least one electronic label 100 in the images. The processing means 480, 485 may extract information from the electronic label 100 in the images. Based on the extracted information, further information may be obtained by the processing means 480, 485 from a database 490. The database 490 may for example be a separate database storing further information about the products 130, or the databases 160 and 490 may be provided in the form of one single database. The processing means 480, 485 may then determine a visual representation of the further information. The visual representation may be included in the output images and displayed on the display 470. As described above with reference to Figure 2 and 3, the display 470 may, for example, be a display of a smartphone or a transparent display of augmented reality glasses.

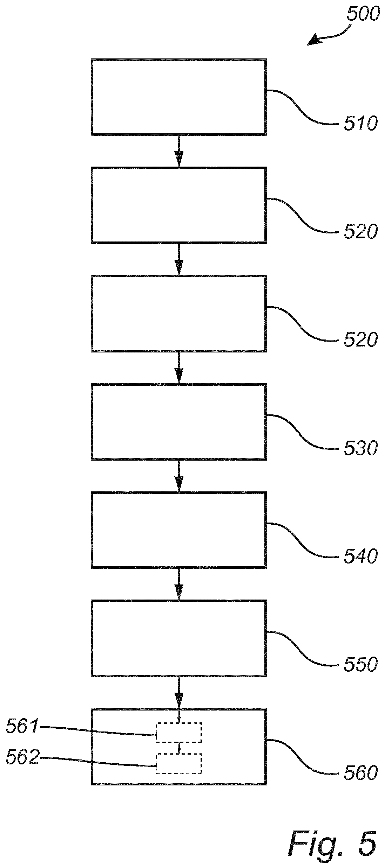

Figure 5 is a flow chart of a method 500 for displaying further information according to an embodiment. The method 500 may, for example, be performed by the system 400 or the processing means 480, 485 of the system 400. The method 500 may for example be performed by a user device 450, such as the handheld device 250 or the head-wearable device 350 described with reference to Figures 2 and 3. The method 500 may comprise method steps corresponding to actions described above with reference to Figures 2, 3 and 4.

The method 500 comprises a step of obtaining 510 a sequence of input images and a step of detecting 520 an electronic label 100 in the input images. The detecting 510 of the electronic label 100 in the input images may be done with image processing and image recognition, and may be based on knowledge of the visual characteristics of the electronic label 100.

The method 500 comprises a step of tracking 530 a position of the electronic label 100 in the input images. The tracking 530 may also be based on the knowledge of the visual characteristics of the electronic label 100.

The method 500 comprise a step of extracting 540 information about what is shown at the electronic label 100, based on at least one of the input images. The extracting may comprise extracting text from the label, for example a product name, an identifier or the price of the product, or extracting a QR code, a bar code or some other visual code.

The method 500 comprises a step of obtaining 550 further information about the product 130 associated with the electronic label 100, based on the extracted information from the electronic label 100. The further information may be obtained from the database 490.

Optionally, the further information may be obtained also based on information about the user using the device 450. Such user information may allow the further information (or a visual representation of the further information) to be tailored to the particular user. The user information may for example be retrieved from the user device 450 itself, or from a remote database. The user information may for example have been gathered by the user device itself.

The method 500 comprises a step of generating 560 data representing a sequence of output images to be displayed at the display 470, wherein the output images include a visual representation of the further information. The step of generating 560 the data comprises determining 561, based on the tracked position of the electronic label 100 in the input images, positions at the display 470 at which at least a portion of the visual representation is to be displayed as part of the respective output images.

In some embodiments, the output images are modified versions of the input images. In such embodiments, the step of generating 560 the data may comprise modifying 562 the input images, or modified versions of thereof, by including the visual representation of the further information in accordance with the determined positions.

The person skilled in the art realizes that the present invention is by no means limited to the preferred embodiments described above. On the contrary, many modifications and variations are possible within the scope of the appended claims. For example, it will be appreciated that the steps of any method disclosed herein do not necessarily have to be performed in the exact order disclosed, unless explicitly stated to the contrary. It will also be appreciated that the functionalities described with reference to Figure 2 may be applied also for the embodiments described with reference to Figure 3, where applicable, and vice versa.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The division of tasks between functional units referred to in the present disclosure does not necessarily correspond to the division into physical units; to the contrary, one physical component may have multiple functionalities, and one task may be carried out in a distributed fashion, by several physical components in cooperation. A computer program may be stored/distributed on a suitable medium, such as an optical storage medium or a solid-state medium supplied together with or as part of other hardware, but may also be distributed in other forms, such as via the Internet or other wired or wireless telecommunication systems. The mere fact that certain measures are recited in mutually different dependent claims does not indicate that a combination of these measures cannot be used to advantage. Any reference signs in the claims should not be construed as limiting the scope.

## Claims

1. A method (500) comprising:
obtaining (510) a sequence of input images;
detecting (520) an electronic label (100) in the input images, wherein the electronic label has a first display (110) for displaying information about a product (130) associated with the electronic label;
tracking (530) a position of the electronic label in the input images;
extracting (540), based on at least one of the input images, information about what is shown at the electronic label;
obtaining (550), based on the extracted information, further information about the product associated with the electronic label; and
generating (560) data representing a sequence of output images to be displayed at a second display (270), wherein the output images include a visual representation (210, 220, 230, 240) of the further information, and wherein generating the data includes:
determining (561), based on the tracked position of the electronic label in the input images, positions at the second display at which at least a portion (210, 220, 240) of said visual representation is to be displayed as part of the respective output images.

2. The method of claim 1, wherein the output images are modified versions of the input images, and wherein generating the data comprises:
modifying (562) the input images, or modified versions of thereof, by including the visual representation of the further information in accordance with the determined positions.

3. The method of claim 2, wherein said positions are determined such that:
said at least a portion of said visual representation of the further information is provided within a certain distance (D) from the electronic label in the output images.

4. The method of claim 2, wherein said positions are determined such that:
said at least a portion (240) of said visual representation of the further information overlaps or replaces at least part of the electronic label in the output images.

5. The method of claim 1, wherein the second display (370) is at least partially light transmissive for allowing a user to see objects behind the second display as well as the output images when the output images are displayed at the second display.

6. The method of claim 5, wherein said positions are determined such that:
said at least a portion of said visual representation of the further information is provided within a certain distance from regions of the second display corresponding to the tracked position of the electronic label in the input images; or
said at least a portion of said visual representation of the further information overlaps regions of the second display corresponding to the tracked position of the electronic label in the input images.

7. The method of claim 3 or 6, wherein the certain distance is:
twice as large as a width of the electronic label in the respective input images; or
a fourth of a diameter of the second display.

8. The method of any of the preceding claims, wherein said at least a portion of said visual representation of the further information includes:
a portion of the further information itself (210, 230, 240);
a portion of a visual link (220, 380) between the further information and the electronic label; or
a portion of a visual effect (390) for conveying the further information.

9. The method of any of the preceding claims, wherein the extracted information is information about what is displayed at the first display.

10. The method of any of the preceding claims, wherein at least one of the steps of detecting the electronic label in the input images and tracking a position of the electronic label in the input images is based on knowledge of a visual characteristic shared by a plurality of electronic labels associated with different types of products.

11. The method of any of the preceding claims, wherein the further information comprises:
information about how many items of said product are to be arranged at a shelf (140); or
information about how items of said product are to be positioned at a shelf (140).

12. A computer program product comprising a computer-readable medium with instructions for performing the method of any of the preceding claims.

13. A system (400) comprising:
a camera (460) configured to capture a sequence of input images;
processing means (480, 485) configured to detect an electronic label (100) in the input images, wherein the electronic label has a first display (110) for displaying information about a product (130) associated with the electronic label; and
a second display (470) configured to display a sequence of output images,
wherein the processing means is further configured to:
track a position of the electronic label in the input images;
extract, based on at least one of the input images, information about what is shown at the electronic label;
obtain, based on the extracted information, further information about the product associated with the electronic label; and
generate data representing the output images to be displayed at the second display, wherein the output images include a visual representation (210, 220, 230, 240) of the further information, and wherein generation of the data includes determination, based on the tracked position of the electronic label in the input images, of positions at the second display at which at least a portion (210, 220, 240) of said visual representation is to be displayed as part of the respective output images.

14. The system of claim 13, wherein the camera, the second display and at least part of the processing means are comprised in a portable device (450).

15. The system of claim 13 or 14, further comprising:
a plurality of electronic labels (100) having displays for displaying information about different products associated with the respective electronic labels; and
a database (160, 490), configured to store, for each of the products:
information about what is displayed by the electronic label associated with the product, and
further information for the product,
wherein the processing means is configured to obtain the further information via a request to the database.
